# EUROPEAN PATENT APPLICATION

(11) **EP 4 721 574 A1**
(43) Date of publication of application: **08.04.2026**
(21) Application number: 24739230.1
(22) Date of filing: 28.05.2024
(51) Int. Cl.: A23B 7/154, A23B 7/16, A23L 3/3454, A23L 3/3463, A01N 25/28, A01N 31/08

(54) **COMPOSITION FOR SURFACE MICROBIAL DECONTAMINATION OF FRESH FRUITS AND VEGETABLES**

(30) Priority: 31.05.2023 ES 202330437
(71) Applicant: Universidad Politecnica de Cartagena, 30202 Cartagena (Murcia) (ES)
(72) Inventor: LÓPEZ GÓMEZ, Antonio, 30202 CARTAGENA (Murcia) (ES); MARTÍNEZ HERNÁNDEZ, Ginés Benito, 30202 CARTAGENA (Murcia) (ES)
(74) Representative: Herrero & Asociados, S.L.
(86) International application number: PCT/ES2024/070323
(87) International publication number: WO 2024/246393

(57) **Abstract**

The present invention relates to a powder composition for the surface microbial decontamination of fresh fruits and vegetables that comprises: essential oils (EOs) molecularly encapsulated in α-cyclodextrins (α-CDs), forming inclusion complexes, in a proportion by weight, with respect to the total dry weight of the composition, from 35 to 55%; empty α-CDs, in a proportion by weight, with respect to the total dry weight of the composition, from 35 to 55%; free EOs adsorbed on the α-CDs, in a proportion by weight, with respect to the total dry weight of the composition, from 5 to 10%; and water, in a proportion by weight, with respect to the total dry weight of the composition, less than 4%. Likewise, this invention contemplates procedures for the microbial decontamination of fresh fruits and vegetables by applying said composition, formulated in water or in water-based emulsions containing waxes or other polymeric components.

## Description

### FIELD OF INVENTION

The present invention is within the field of surface microbial decontamination technology for solid foods. In particular, it refers to a new composition comprising essential oils (EOs) and alpha-cyclodextrins (α-CDs), which can be formulated in drinking water or in water-based emulsions, which, once applied by bath or shower. It has an intense and immediate action of superficial microbial decontamination of fresh fruits and vegetables, and has a sustained effect over time of antimicrobial, antioxidant, antigerminant and/or enzymatic inhibition, which allows better conservation of freshness characteristics of fresh fruits and vegetables stored in cold storage.

### BACKGROUND OF THE INVENTION

In the state of the art, different solutions have been proposed to reduce the surface microbial load of fresh fruits and vegetables and thus control the post-harvest pathology of these fresh foods. Many of these compositions are of natural origin and include EOs along with agents that improve their water solubility, mainly surfactants for food use.

In this sense, the Spanish patent ES2163999 B1 proposes a composition consisting of non-encapsulated EOs, which also includes a surfactant (chosen from the different families accepted as food additives, such as emulsifiers, polysorbates, lecithins, etc.), to improve the water solubility of EOs, and an oligosaccharide, from any plant tissue or algae. In this case, it is not indicated or intended that the EOs are encapsulated or adsorbed on these oligosaccharides. In fact, the proportion by weight for these oligosaccharides, proposed in this document, is very small, since it is between 1 and 5%.

Other similar compositions of the state of the art always propose the use of agents to improve the solubility of the EOs. In such compositions, typically, the weight proportion of EOs is relatively high, which can lead to serious phytotoxicity effects on the treated fresh fruits and vegetables. This is the case of patents FR 2529755, US4978686, or CA2012288. Furthermore, in most cases, the compositions are proposed for foliar application, in the field, but not as a post-harvest treatment, to control microbial pathologies of fresh harvested fruits and vegetables.

There are other patents that propose compositions of EOs trapped in adsorbents such as silica gel, as is the case of patent ES2278052, which describes a formulation that includes citral, along with an antioxidant, and even a chemical synthesis agent, which is imazalil. The same occurs with patent application US 2020214305A1, which proposes an aqueous composition that includes at least one phospholipid and a polysorbate, and that may contain EOs and other chemical synthesis agents with fungicidal activity, such as imazalil.

Patent application US2019037839A1 proposes a composition for the controlled release of active agents, for preserving fresh fruits and vegetables, which uses β-cyclodextrins for the encapsulation of active agents, which can be EOs. This patent also proposes the use of α-CDs as an encapsulating agent for 1-MCP (1-methylcyclopropene), which is a gaseous chemical synthesis agent that blocks or inhibits the action of ethylene but does not have an antimicrobial action. This composition is configured to release the active ingredient in a controlled manner, in the volatile or gaseous phase, without the addition of external wetting or hydration.

There are also various proposals in the scientific literature related to the surface decontamination of fresh fruits and vegetables using EOs encapsulated in β-CDs or other cyclodextrins. These compositions base their antimicrobial action on a controlled release (modulated over time) of the EOs encapsulated in beta-cyclodextrins (β-CDs). In this way, although these existing proposals control microbial growth during the conservation stage of fresh fruits and vegetables, they do not achieve a high initial microbial reduction, necessary so that it can be maintained later through the controlled release of EOs.

Patent application US2015157027A1 describes a composition comprising a dextrin and one or more plant treatment agents, such as essential oils. In this composition, the dextrin and the EOs interact in such a way that part of the dextrin encapsulates said EOs, part of the dextrin binds to the EOs, and part of the dextrin mixes, but does not bind, to one or more EOs, Therefore, these EOs are completely free, not adhered, nor linked in any way, with the dextrin.

However, the use of high concentrations of completely free EOs in solution, to control the post-harvest pathology of fresh fruits and vegetables, by means of bathing, presents a serious phytotoxic effect, causing deterioration and staining of the skin of said fresh fruits and vegetables, which makes it unfeasible from a technical point of view.

Based on the limitations found in the compositions described in the state of the art, the authors of the present invention have developed a new composition based on the combined use of EOs encapsulated in cyclodextrins together with EOs adsorbed (not encapsulated) in agglomerate particles of cyclodextrin molecules, without the presence of free EOs. The characteristics of this new composition allow a more intense decontaminating action to be carried out at the exact moment of application, which constitutes an initial shock antimicrobial treatment to reduce the high microbial loads of fresh fruits and vegetables from the field.

In the article by Barba, C., et al. (2015) Preparation and characterization of β-cyclodextrin inclusion complexes as a tool of a controlled antimicrobial release in whey protein edible films, LWT-Food Science and Technology, 64(2), 1362-1369*,* select the encapsulation of the mixture of eugenol and carvacrol in β-CD, over encapsulation in α-CD, because the retention of eugenol and carvacrol is greater in β-CDs than in α-CDs. The antimicrobial effect of eugenol encapsulated in alpha-cyclodextrin is not analyzed, compared to the antimicrobial effect achieved when encapsulated in beta-cyclodextrin, nor is it proposed for the surface decontamination of fresh fruits and vegetables, together with free EOs (not encapsulated). and empty cyclodextrins (playing with the adsorption function of non-encapsulated EOs).

In the article by López-Miranda, S., Berdejo, D., Pagán, E., Garcia-Gonzalo, D., & Pagán, R. (2021). Modified cyclodextrin type and dehydration methods exert a significant effect on the antimicrobial activity of encapsulated carvacrol and thymol. Journal of the Science of Food and Agriculture, 101(9), 3827-3835*)*, the *in vitro* antimicrobial activity of carvacrol and thymol encapsulated in different cyclodextrin derivatives is compared: HP-α-CDs, HP-β-CDs, and HP-γ-CDs (hydroxypropyl-alpha-cyclodextrin, hydroxypropyl-beta-cyclodextrin and hydroxypropyl-ganma-cyclodextrin, respectively) and show that thymol encapsulated in HP-α-CDs gives rise to greater inhibition zones than when It is used encapsulated in HP-β-CDs. However, they do not analyze the antimicrobial effect *in vivo* (surface decontamination directly on fresh fruits and vegetables) and its prolonged action over time once bathed in water that includes thymol encapsulated in α-CDs. Nor do they propose the combined use of EOs encapsulated in cyclodextrins together with EOs adsorbed (not encapsulated) in particles of cyclodextrin molecules. In fact, there is no work in the bibliography that analyzes or considers the composition that is the object of this invention.

Indeed, there is no work in the literature that proposes the application of EOs encapsulated with cyclodextrins together with unencapsulated EOs, but adsorbed to said cyclodextrins, to achieve an intense initial surface decontamination effect on fresh fruits and vegetables. The antimicrobial effect of EOs occurs when they come into contact (in a free but adsorbed, not encapsulated form) with the cell wall of the microorganisms, where it causes alterations that lead to immediate microbial inactivation. If the EO is in a completely encapsulated form, as its release is slow, the amount of "free" (non-encapsulated) EO is relatively small in aqueous solution, much lower than that needed for effective initial surface decontamination of fresh fruits and vegetables from the field. On the other hand, if the non-encapsulated EO is completely free in an aqueous solution, not linked in some way to cyclodextrins or inclusion complexes, it does not have antimicrobial activity, unless it is in a relatively high concentration. And if this is the case, this oil will cause phytotoxicity in vegetables (fresh fruits and vegetables).

For all of the above, and as a consequence of the surprising experimental results obtained by the authors of the present invention in the surface decontamination of fresh fruits and vegetables, the present invention proposes a new composition in powder form that is characterized by including a combination of EOs, one part encapsulated within α-CDs and another part adsorbed on the surface of the α-CDs, which allows a more intense initial release of EOs (of those adsorbed on the surface of the α-CDs) followed by a controlled release in time (of the EOs encapsulated within the α-CDs).

The proposed composition only includes ingredients for food use, called food flavors and alpha-cyclodextrins (food fiber). Therefore, the application of this new composition could not make it necessary to use waxes or coatings based on polymeric compounds, and would avoid the use of synthetic chemical agents (fungicides) that have harmful effects on health, as is the case of thiabendazoles, orthophenylphenol, imazalil, and benomyl, for example. Likewise, it has no legal consumption limits, as in the case of compositions that include beta-cyclodextrins as an encapsulation agent, or ingestion, so once applied to fresh fruits and vegetables they can be consumed without negative effects occur on the health of the consumer.

### OBJECT OF THE INVENTION

The object of the invention is a powder composition for post-harvest surface microbial decontamination of fresh fruits and vegetables that comprises: essential oils (EOs) molecularly encapsulated in α-cyclodextrins (α-CDs), forming inclusion complexes, in a proportion by weight , with respect to the total dry weight of the composition, from 35 to 55%; Empty α-CDs, in a proportion by weight, with respect to the total dry weight of the composition, of 35 to 55%, free EOs adsorbed on the surface of the α-CDs (empty or forming inclusion complexes with the EOs), in a proportion by weight, with respect to the total dry weight of the composition, of 5 to 10%; and water, in a proportion by weight, with respect to the total dry weight of the composition, of less than 4% (moisture content on a dry basis of the composition object of this invention) (hereinafter, composition of the invention).

Also, the object of the invention is a procedure for the surface microbial decontamination of fresh fruits and vegetables (hereinafter, the method of the invention) that comprises the steps of:
a. Dissolve the powder composition of the invention in drinking water or in a water-based emulsion, stirring until the composition is completely dissolved.,
b. Apply the aqueous solution prepared in a) on fresh fruits and/or vegetables, and
c. Dry the fruits and/or vegetables treated in b).

Finally, the object of the invention is the use of the composition of the invention for the surface microbial decontamination of fresh fruits and vegetables.

### BRIEF DESCRIPTION OF THE FIGURES

**Figure 1****.** Evolution of the surface count of total mesophilic aerobic microorganisms (TMA) in snack cucumbers, which have been bathed in aqueous solution with concentrations of 2, 3 and 4% of the composition object of this invention, and preserved in refrigeration (10 °C and RH of 85 %) for 11 days.
**Figure 2****.** Evolution of the surface count of molds in snack cucumbers, which have been bathed in aqueous solution with concentrations of 2, 3 and 4% of the composition object of this invention, and preserved in refrigeration (10 °C and RH of 85%) for 11 days.
**Figure 3****.** Evolution of the surface count of **(A)** psychrophilic microorganisms (PSIC) and **(B)** enterobacteria (ENT) in snack cucumbers, which have been bathed in aqueous solution with concentrations of 2, 3 and 4% of the composition object of this invention, and kept refrigerated (10 °C and 85% RH) for 11 days.
**Figure 4****.** Evolution of firmness in snack cucumbers, which have been bathed in aqueous solution with concentrations of 2, 3 and 4% of the composition object of this invention, and preserved in refrigeration (10 °C and RH of 85%) for 7 days.
**Figure 5****.** Surface count of **(A)** total mesophilic aerobic microorganisms (TMA), **(B)** enterobacteria (ENT) and **(C)** lactic acid bacteria (LAB) for days 0 and 4 of refrigerated storage of peeled garlic cloves decontaminated in a bath with water that includes the composition object of this invention. The white bars are from the control and the black bars are from the decontaminated product.
**Figure 6****.** Surface mold count for day 0 and 4 of refrigerated conservation of peeled garlic cloves decontaminated in a water bath that includes the composition object of this invention. The white bars are from the control and the black bars are from the decontaminated product.
**Figure 7****.** Surface count of total mesophilic microorganisms (in CFU/cm2) in fresh snack cucumbers, before (hatched bar) and after treatment with 2% aqueous solutions of the composition of the invention with α-CD (black bar) or a solution with a similar composition, but using β-CD (gray bar).
**Figure 8****.** Surface count of molds (in CFU/cm²) on fresh snack cucumbers, before (dashed bar) and after treatment with 2% aqueous solutions of the composition of the invention with α-CD (black bar) or a solution with a similar composition, but using β-CD (gray bar).
**Figure 9****.** Surface count of total mesophilic microorganisms (in CFU/cm²; left graph) and fungi (right graph), in fresh lemons, before (gray bar) and after treatment with a 2% aqueous solution using the composition object of this invention with α-CD (hatched bar) or a 4% solution with a similar composition, but using β-CD (white bar).

### DESCRIPTION OF THE INVENTION

To overcome the limitations found in the state of the art in relation to post-harvest surface microbial decontamination of fresh fruits and vegetables, the present invention provides a new composition that includes a combination of EOs, part encapsulated within α-CDs and part adsorbed on the surface of α-CDs (empty or forming inclusion complexes with the EOs), which allows a more intense initial release of EOs (of those adsorbed on the surface of the α-CDs) followed by a controlled release over time (from EOs encapsulated within α-CDs).

Thus, in a main aspect of the invention, a powder composition is contemplated for post-harvest surface microbial decontamination of fruits and vegetables that comprises:
- EOs molecularly encapsulated in α-CDs, forming inclusion complexes, in a proportion by weight with respect to the total dry weight of the composition, of 35 to 55%, preferably, of 40 to 50%,
- empty α-CDs (without encapsulating EOs), in a proportion by weight with respect to the total dry weight of the composition, of 35 to 55%, preferably, of 40 to 50%,
- EOs not encapsulated in α-CDs, which would be in adsorbed form on the α-CDs, either empty or forming inclusion complexes with the EOs, in a proportion by weight, with respect to the total weight of the composition, of 5 to 10%, preferably 6 to 8%, and
- Water, in a proportion by weight, with respect to the total dry weight of the composition, less than 4% (moisture content on a dry basis of the composition object of this invention).

Free EOs, not encapsulated and not linked in any way to cyclodextrins or inclusion complexes, in an aqueous solution do not have antimicrobial activity, unless they are present in a relatively high concentration, which would cause a phytotoxic effect on plants.

This is why, in the powder composition of the invention, and thanks to the proportions used of each component, the EOs are always bound, either encapsulated or in an adsorbed state, in the cyclodextrins and/or inclusion complexes, so that reach more easily the surface of the cell membranes of the target microorganisms that are in aqueous solution.

The EOs used in the composition of the invention can be pure EOs of plant origin, selected from those that come from shoots or buds, flowers, leaves, stems, branches, seeds, fruits, roots, or wood or bark, or a mixture of them. For example, it can be EO of citrus, orange, lemon, tangerine, lime, grapefruit, bergamot, lemongrass, or oregano, rosemary, thyme, lemongrass, cinnamon, basil, peppermint, dill, tea tree, clove, fennel, pepper, among many others. It can be used one of the components, main or not, of these EOs known for their proven antimicrobial effect. For example, in a particular embodiment the EOs components useful in the context of the present invention are selected from those that are terpenes, or terpenoids, or aromatic or aliphatic constituents, or a mixture thereof. Another possible embodiment contemplates the use of a mixture of the aforementioned EOs components with one or more pure EOs. That is, mixtures of pure EOs can be used, with or without the addition of one or more of their major components (such as thymol, carvacrol, among many others). Depending on each application (to one type or another of fruit or vegetables) and the type of microorganisms whose growth is to be inhibited, a certain EO or a certain combination of EOs will be more appropriate, including, or not, one or more of their main components (such as thymol, carvacrol, among others).

In a particular embodiment of the composition of the invention, the α-CDs used have the following characteristics:
- Number of glucose units: 6;
- Molecular weight: 972;
- Number of water molecules in the cavity: 6;
- Solubility in water at 25 °C (%w/v): 14.5;
- Diameter of the central cavity (nm): 0.5-0.6;
- Outer diameter (nm): 1.4-1.5; and
- Height of toroidal shape (nm): 0.8.

As the interior cavity of alpha-cyclodextrins is hydrophobic, these molecules are capable of harboring smaller hydrophobic molecules (such as the molecules of the different components of EOs) to form "host-guest" inclusion complexes, in which the molecule host is encapsulated by cyclodextrin. In this way, molecules insoluble in water, such as those of the components of EOs, can become completely soluble.

Because the encapsulation capacity of α-CDs is lower than that of β-CDs, and that the composition object of this invention is prepared in such a way that a greater amount of EO is incorporated than can be encapsulated in the α-CDs, a part of the EOs remains unencapsulated and is adsorbed on aggregate particles of α-CDs molecules. This EO is adsorbed on the surface of the α-CD particles through weaker bonds than those between the internal cavity of the α-CDs and the EO molecules. Indeed, α-CDs and guest molecules interact through different forces to form inclusion complexes, such as dipole-dipole interactions and hydrophobic interactions; while surface adsorption is a reversible phenomenon that occurs through weaker forces than the previous ones. In this way, at the time of the microbial decontamination treatment of fresh fruits and vegetables, a faster and more intense release of the superficially adsorbed EOs is achieved, achieving an intense reduction of the surface microbial load of the fruits and vegetables treated with the aqueous solution that includes the composition object of this invention. The subsequent controlled release of the EOs encapsulated inside the α-CDs ensures that the decontamination effect is prolonged during the conservation time of these fresh fruits and vegetables thus treated.

Furthermore, the choice of α-CDs, versus β-CDs, in combination with the specific percentages of each of the elements of the composition of the present invention, guarantees the absence of completely free EOs, and therefore of the negative effects. on the fruits and vegetables treated mentioned above.

For nanoencapsulation or preparation of the inclusion complex (as a solid complex in powder form) between the EO or combination of EOs (or one of its components, or a combination of EOs with one or more of its components) and α-CDs any of the following methods can be used: kneading method, coprecipitation method, heating method in a sealed container or container, gas (or vapor)-liquid interaction method, freeze-drying method, atomization method, or using supercritical fluids (as described in detail in Marques, H.M.C. (2010). A review on cyclodextrin encapsulation of essential oils and volatiles. Flavor and fragrance journal, 25(5), 313-326). Afterwards, the composition object of this invention will be obtained simply by mixing, in the indicated proportions, the EO encapsulated in the α-CDs, with non-encapsulated EO, and with empty α-CDs (in a flour mixer, until achieving total homogeneity).

In another main aspect of the invention, a procedure is contemplated for the post-harvest surface decontamination treatment of fresh fruits and vegetables, which comprises the following steps:
a) Dissolve the composition of the invention in drinking water or in a water-based emulsion, stirring until the composition is perfectly dissolved.
b) Apply the aqueous solution obtained in a) on the fruits and/or vegetables, and
c) Dry the fruits and/or vegetables treated in b).

In particular embodiments, the dissolution of the composition (step a) can be carried out in:
- drinking water, in a proportion by weight not exceeding 2% (2 g of the powder composition/100 g of drinking water or 20 g of the powder composition/kg drinking water) or,
- in a water-based emulsion, in a proportion by weight not exceeding 4% (4 g of the powder composition/100 g of aqueous emulsion or 40 g powder composition/kg of aqueous emulsion), reaching after stirring a final solids content less than 12% in the emulsion.

The application of the aqueous solution, either in drinking water or in aqueous emulsion, (step b) can be carried out:
- bathing (submerging) the fresh fruits and/or vegetables in the solution obtained in a) for a time of 0.5 to 15 minutes, preferably 0.8 to 1.2 minutes, or
- applying the aqueous solution obtained in a) to the fruits and/or vegetables using showers, at a rate of 1 to 1.2 liters of solution per 1000 kg of fruits and/or vegetables.

The drying of fruits and/or vegetables in step c) of the procedure of the invention can be carried out:
- by vacuum cooling, drying and cooling the fruits and/or vegetables at the same time, or,
- Through an air tunnel at a temperature below 55 °C, preferably at a temperature between 25 and 35 °C.

The particular ingredients of the composition of the invention, in the indicated proportions, guarantee good dispersion and adequate dissolution in water, which is essential to achieve good microbial decontamination efficiency on the surface of fresh fruits and vegetables, such as detailed below. Thus, for example, if the composition of the invention included β-CDs, instead of α-CDs, with the 2% solution indicated above, adequate solubility in water would not be achieved, and this would result in a lower antimicrobial effect on the surface of fresh fruits and vegetables to be decontaminated.

The composition, and the way of applying the composition of the invention on the surface of fresh fruits and/or vegetables, using the procedure of the invention, allows the encapsulated EOs not to evaporate during subsequent drying, although they do evaporate the EOs that are not encapsulated and that were simply adsorbed on the α-CDs. In this way, once these fresh fruits and vegetables are packaged and stored in cold rooms at low temperature and high relative humidity (typically above 80%), a certain exchange of water vapor occurs with the inclusion complexes that these packaged fresh fruits and vegetables have on the surface, and the release of EO vapors from said surfaces takes place (due to decomposition of the inclusion complexes formed between the EOs and cyclodextrins). These EOs released in the vapor phase exert an antimicrobial and other type of action (antioxidant, antigerminant, or enzyme inhibition) on the microorganisms and enzymes present mainly on the surface, or in the internal areas close to the surface, of fresh fruits and vegetables. Furthermore, the absence of completely free EOs in the composition avoids phytotoxicity problems on vegetables.

Thus, the composition of the present invention, which can be formulated in drinking water or in water-based emulsions, used for surface coating of vegetables and fruits such as citrus fruits, such as emulsions of waxes or other polymeric components, presents activity in two phases: one that takes place during the bath or shower of fresh fruits and vegetables, which has an intense surface microbial decontamination action, and another, which takes place later during the conservation of these treated fresh fruits and vegetables, which has an antioxidant, and/or antigerminant and/or enzymatic inhibition action, and which allows better conservation of the freshness characteristics of these fresh fruits and vegetables treated with the composition object of this invention.

Based on the above, another aspect of the invention refers to a formulation that comprises an aqueous solution of the composition of the invention.

In a particular embodiment of the formulation, the aqueous solution of the composition is in drinking water, in a proportion by weight not exceeding 2%.

In another particular embodiment of the formulation, the aqueous solution of the composition is in a water-based emulsion, in a proportion by weight of no more than 4%.

Finally, another main aspect of the invention contemplates the use of the composition of the invention for the surface microbial decontamination of fresh fruits and/or vegetables.

In a surprising and novel way, the use of the composition of the invention, once applied to fresh fruits and/or vegetables with the procedure of the invention, by bath or shower, allows a reduction in the surface microbial load (of total mesophilic aerobes microorganisms) of between 2 and 4 log units, in treated fresh fruits and vegetables. Furthermore, the decontamination effect is subsequently prolonged over time, controlling microbial growth on the surface of fresh fruits and vegetables, preserved in refrigeration, as detailed below in the examples of embodiments of this invention.

### EXAMPLES

Examples are listed below, as non-exclusive ways of carrying out the invention.

### Encapsulation of EOs in α-CDs:

An inclusion complex of EOs with α-CDs was prepared following any of the methods proposed by Marques (2010). The inclusion complex was obtained by combining EOs with α-CDs according to an equimolar relationship. The EO used was a combination of eugenol and thymol in a 1:1 (weight/weight) ratio.

### Example 1: Manufacturing and application of the composition object of this invention, for surface microbial decontamination and improvement of the refrigerated conservation of fresh snack cucumbers.

The following stages were carried out:
1. Manufacturing and obtaining of the αCD-EOs inclusion complex in powder form, with the composition described above, and using a combination of eugenol and thymol EOs.
2. Mixture of the inclusion complex obtained in (1) (in a proportion of 43.60% by dry weight) with the rest of the ingredients in the following proportions: 48.55% (by dry weight) of empty α-CD, and 7.84% of the EOs combination indicated above, in a flour mixer, until good homogeneity is achieved.
3. Dissolution of this composition in drinking water, in a proportion by weight of 2% (2 g/100 g of water or 20 g/kg of water), 3% (3 g/100 g of water or 30 g/kg of water) and 4% (4 g/100 g of water or 40 g/kg of water), stirring until this composition is perfectly dissolved.
4. Bathing the fresh snack cucumbers in these aqueous solutions prepared in 3) for a time of 1.0 minute.
5. Drying of the cucumbers bathed in the previous solutions using hot air at a temperature of 30 °C.

Next, the cucumbers were packaged in macro-perforated plastic containers (clamshell type, with a body and a lid, attached or not to the body of the container), weighing 250 g each, and were stored in a cold room at 10 °C and relative humidity of 85%, for 11 days. Periodically, on samples of refrigerated stored snack cucumbers, the following analyzes were carried out:
- Analysis of the surface microbiology (total mesophilic aerobic microorganisms, psychrophiles, enterobacteria and molds) of snack cucumbers.
- Sensory analysis of snack cucumbers
- Analysis of the firmness of snack cucumbers, in a texturometer (TA-XT Plus TA Instruments model; Surrey, United Kingdom), determining the force required (in Newton, N) to penetrate the surface of the whole cucumber by 2 mm with a cylindrical test tube of 4 mm in diameter. Each trial was carried out with a speed of 1 mm s⁻¹, and 6 cucumbers from each treatment were analyzed.

To carry out the analysis of the surface microbiology of the cucumbers during refrigerated conservation, two halves of snack cucumbers (from each treatment) were sampled and introduced into peptone water for one hour, at a refrigeration temperature of 4 °C. Next, the appropriate serial dilutions were made and sown in the appropriate culture media for each microorganism:
- Total Mesophilic Aerobic Microorganisms (AMT): were seeded deeply on PCA agar (Plate Count Agar) and incubated at 31 °C for 48 hours.
- Total Aerobic Psychrophilic Microorganisms: they were sown deeply on PCA agar (Plate Count Agar) and incubated at 7 °C for 7 days.
- Enterobacteriaceae: they were sown deeply on VRBD (Violet Red Bile Dextrose) agar and incubated at 37 °C for 24 hours.
- Molds: they were sown on the surface of Rose Bengal and incubated at 28 °C for 5-7 days.

The results of the microbial counts were expressed as logarithm of colony forming units (CFU) per cm², measuring the surface of each cucumber through its length and equatorial diameter.

With the treatment of the snack cucumbers in a bath with a 2% solution of the composition object of this invention for 1 minute, it was observed that the visual sensory characteristics of the cucumbers did not deteriorate. What's more, this treatment helped maintain its freshness over time in refrigerated storage. However, in other trials where these cucumbers were treated in baths with a higher concentration (3% and 4%) a negative effect on the visual appearance of the cucumbers was seen. It was observed that it caused a darker coloration of the skin and an increase in roughness. Therefore, concentrations greater than 2% are considered excessive and not suitable for this type of decontamination treatments.

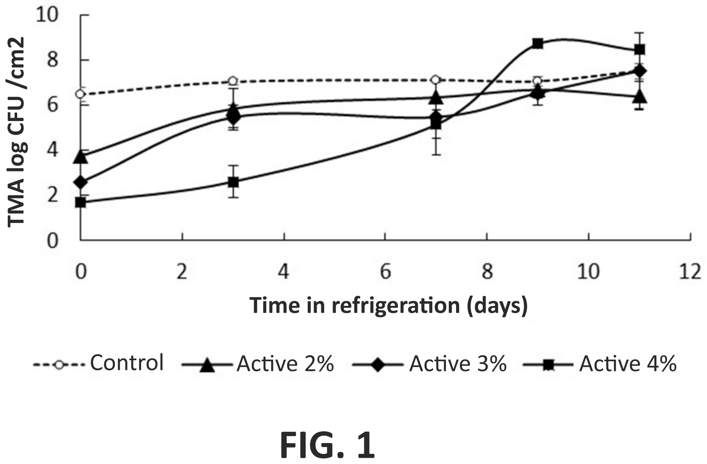

**In** **FIG.1** it can be seen that on day 0 of analysis, the initial count of Total Mesophilic Aerobes (TMA) was 6.5 log CFU/cm² in the control cucumbers (without disinfectant bath). TMA populations were reduced by 2.5-4.5 log CFU/cm² when cucumbers were decontaminated with the composition object of this invention. The higher the concentration of encapsulated EOs, the greater the TMA reduction. After three days of storage, counts were 1.2, 1.6 and 4.4 log CFU/cm² lower in cucumbers decontaminated in baths with concentrations of 2%, 3% and 4%, respectively, when compared to the control, which already reached the limit of 7 log CFU/cm² in TMA on this third day of conservation. In the subsequent analysis days, the count in the decontaminated samples increased, but always remained below the control sample, and the value of 7 was not reached, except at the 4% concentration. In this way, it was obtained that decontamination in a water bath with the composition object of this invention at 2% was sufficient to reduce and control the TMA count in snack cucumbers preserved at 10 °C and 85% RH.

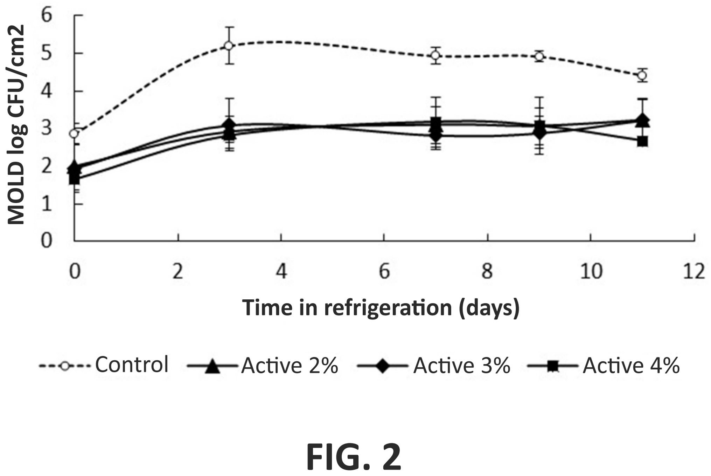

As can be seen in FIG.2, the reduction of the surface load of molds that is achieved with the surface decontamination of the cucumbers, by bathing with this 2-4% solution, is very important. The load difference was 2.5 log CFU/cm² practically throughout the conservation. In view of the results, it is also concluded that the most appropriate concentration of the bath should be 2% or less.

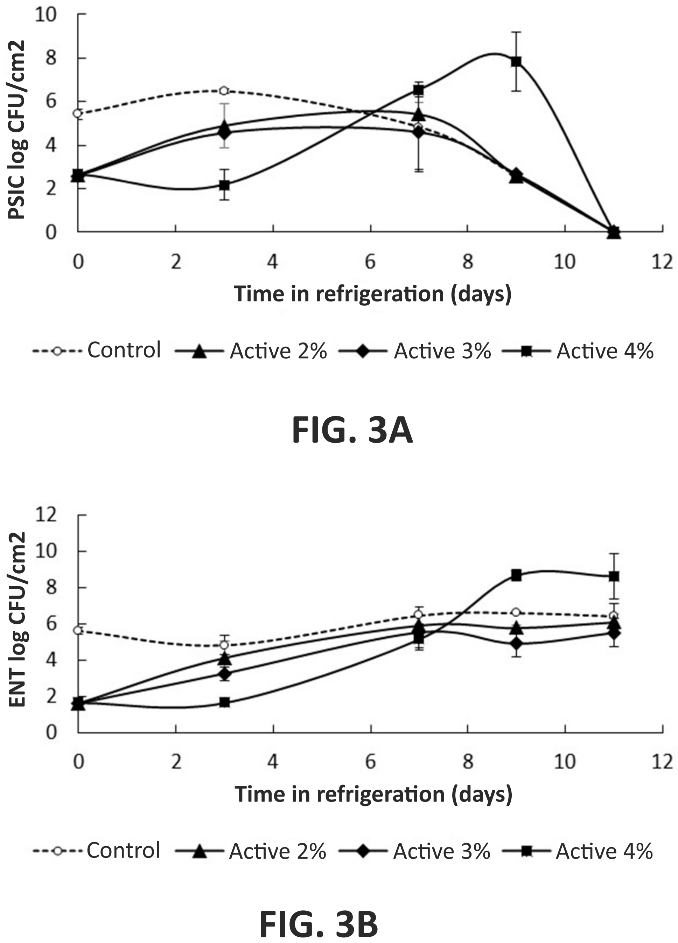

As can be seen in **FIG. 3**, the surface microbial load of enterobacteria (ENT) **(****Fig. 3B****)** and psychrophilic microorganisms (PSIC) **(****Fig. 3A****)** was also significantly reduced with the surface decontamination of cucumbers by bathing in solution that is the object of this invention, the 2% concentration being adequately effective. Therefore, concentrations of 3 and 4% should be discarded because they negatively affect the quality of the product.

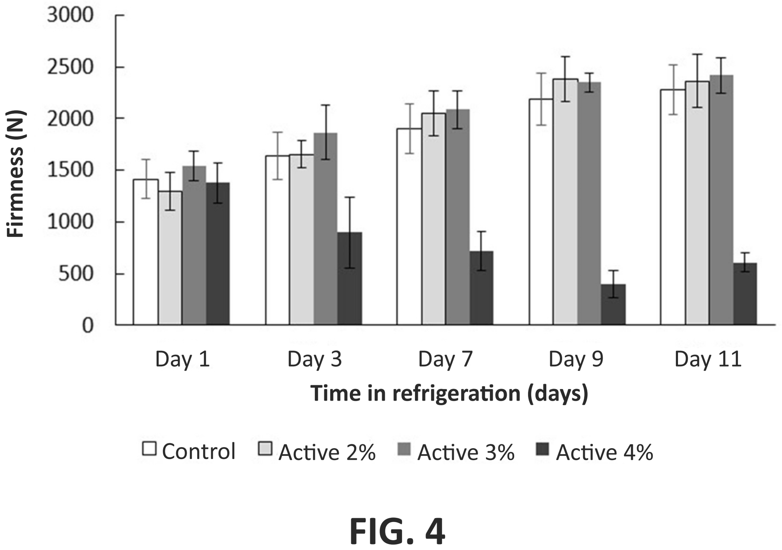

The application of a decontaminating bath with solutions that include the composition object of this invention at 2% and 3% (w/v) did not compromise the firmness of the snack cucumbers, as can be seen in **FIG.4****.** It even improved firmness values compared to the control (cucumbers that did not suffer the surface decontamination bath). However, snack cucumbers bathed with a solution with a higher concentration (4%) had their texture negatively affected. The cucumbers felt softer to the touch.

Regarding the sensory analysis, it was observed that, as the refrigerated conservation time progressed, the samples lost overall quality, especially after day 7 of conservation. However, the bath with a concentration of 2% delayed the sensory deterioration of the cucumbers, maintaining greater freshness characteristics than the control (untreated) cucumbers. Furthermore, when cutting the control cucumbers and those bathed in 2% solution into slices, on day 9 of conservation, it was observed that the bathed cucumbers (with the 2% solution) were less ripe. It was observed that freshness was better preserved when this surface decontamination was carried out in a 2% solution bath. In conclusion, it is evident that bathing with a solution that includes the composition object of this invention at 2% positively influences the appearance, providing the fruits with greater luminosity, shine, softness and freshness, which is also better preserved during refrigerated storage.

### Example 2: Manufacturing and application of the composition object of this invention, for surface microbial decontamination and improvement of the refrigerated conservation of fresh peeled garlic cloves.

The following stages were carried out:
1. Manufacturing and obtaining of the αCD-EOs inclusion complex in powder form, with the composition described above, and using a combination of eugenol and thymol EOs.
2. Mixture of the inclusion complex obtained in (1) (in a proportion of 43.60% by dry weight) with the rest of the ingredients in the following proportions: 48.55% (by dry weight) of empty α-CD, and 7.84% of the EOs combination indicated above, in a flour mixer, until good homogeneity is achieved.
3. Dissolution of this composition in drinking water, in a proportion by weight of 2% (2 g/100 g of water or 20 g/kg of water), stirring until this composition is perfectly dissolved.
4. Bath the peeled fresh garlic cloves in this aqueous solution prepared in 1) for a period of 1.0 minute.
5. Drying of the fresh peeled garlic cloves bathed in the previous solution using hot air at a temperature of 30 °C.

Next, the fresh peeled garlic cloves were packed in heat-sealed plastic containers weighing 250 g each, and stored in a cold room at 2 °C and relative humidity of 85%, for 4 days. Periodically, the following analyzes were carried out on samples of fresh peeled garlic cloves preserved refrigerated:
- Analysis of the surface microbiology (total mesophilic aerobic microorganisms, lactic acid bacteria, enterobacteria and molds) of fresh peeled garlic cloves.
- The same methodology described in example 1 above was used. The results are expressed as log CFU/g of fresh peeled garlic clove.
- Sensory analysis of fresh peeled garlic cloves

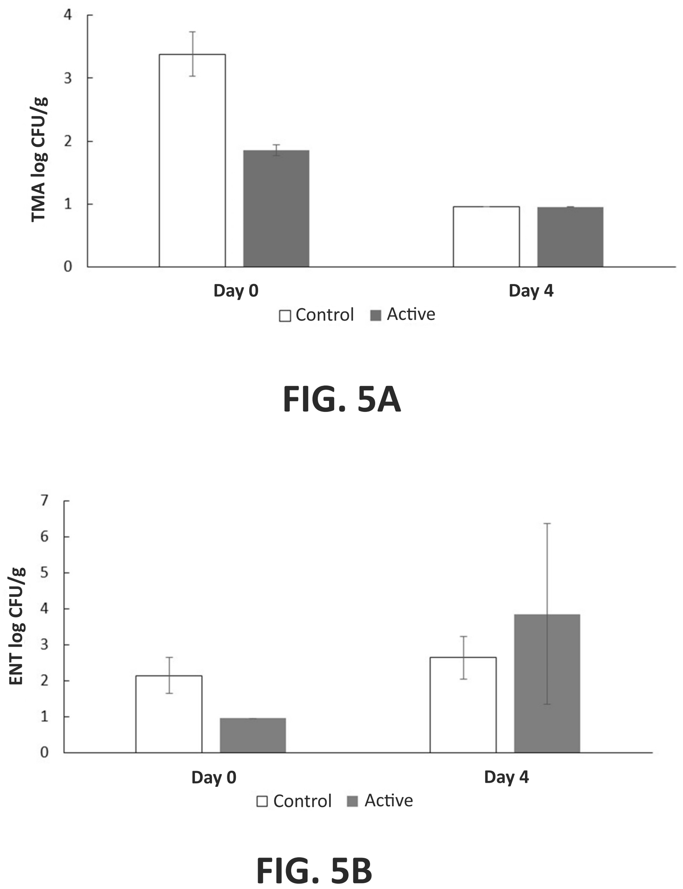

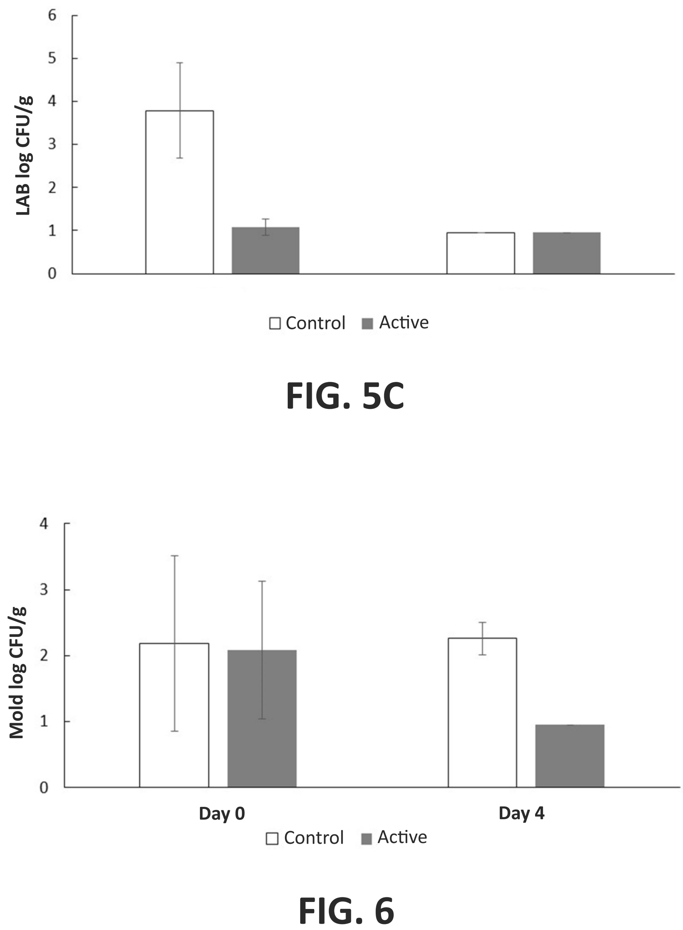

With this decontamination treatment of fresh peeled garlic cloves (bath in a solution with the composition object of this invention at 2% for 1 minute) it was observed that the reduction in the surface microbial load is very significant: almost 2 log CFU/ g in TMA **(****FIG. 5A****),** 1.5 log CFU/g in enterobacteria (**FIG. 5B**) and almost 3 log CFU/g in reduction of lactic acid bacteria (**FIG. 5C**). In molds, the effect of decontamination was also significant, reducing the count by almost 2 log CFU/g as seen in **FIG. 6****.** On day 0 the difference in fungal count was almost 2 log CFU/g lower than in the control. And this difference in fungal count was practically maintained on day 4 of analysis (which is of the order of 1.5 log CFU/g lower than in the control).

The treatment of fresh peeled garlic cloves in a water bath that includes the composition object of this invention significantly and positively affects the overall quality. The peeled garlic cloves treated with this bath had a whiter color. Sensory quality was better preserved with this treatment. The bath of fresh peeled garlic cloves in a 2% solution of the composition object of this invention positively influenced the appearance of the product, which appeared fresher than the untreated product.

### Example 3: Manufacturing and application of the composition object of this invention, for surface microbial decontamination of fresh snack cucumbers. Comparison of the antimicrobial efficacy of the composition object of this invention with a similar composition, but using beta-cyclodextrins.

The following stages were carried out:
1. Manufacturing and obtaining of the αCD-EOs inclusion complex in powder form, with the composition described above, and using a combination of eugenol and thymol EOs.
2. Encapsulation of EOs in β-CDs: An inclusion complex of EOs with β-CDs was prepared following any of the methods proposed by Marques (2010). The inclusion complex was obtained by combining EOs with β-CDs according to an equimolar relationship. The EOs used was a combination of eugenol and thymol in a 1:1 (weight/weight) ratio.
3. Mixture of the inclusion complex obtained in (1) (in a proportion of 43.60% by dry weight) with the rest of the ingredients in the following proportions: 48.55% (by dry weight) of empty α-CD, and 7.84% of the EOs combination indicated above, in a flour mixer, until good homogeneity is achieved.
4. Mixture of the inclusion complex obtained in (2) (in a proportion of 43.60% by dry weight) with the rest of the ingredients in the following proportions: 48.55% (by dry weight) of empty β-CD, and 7.84% of the EOs combination indicated above, in a flour mixer, until good homogeneity is achieved.
5. Dissolution, separately, of these two compositions prepared in (3) and (4) in drinking water, in a proportion by weight of 2% (2 g/100 g of water or 20 g/kg of water), stirring until this composition is perfectly dissolved. Thus, on the one hand, the solution with the composition object of this invention with α-CDs is obtained; and, on the other, a solution of similar composition, but using β-CD.
6. Bathing for 1.0 minute of part of the snack cucumbers in the aqueous solution of the composition with α-CDs; and bathing the other part of the snack cucumbers in the aqueous solution of the composition using β-CDs for a period of 1.0 minute; both solutions prepared as indicated in 5).
7. Drying of the snack cucumbers bathed in the previous solutions using hot air at a temperature of 30 °C.

Next, on the snack cucumber samples, before treating and after treatment with one or another type of solution, the following analyzes were carried out:
- Analysis of the surface microbiology (total mesophilic aerobic microorganisms and molds) of snack cucumbers. The same methodology described in example 1 above was used. The results are expressed as log CFU/cm2 of fresh snack cucumber.

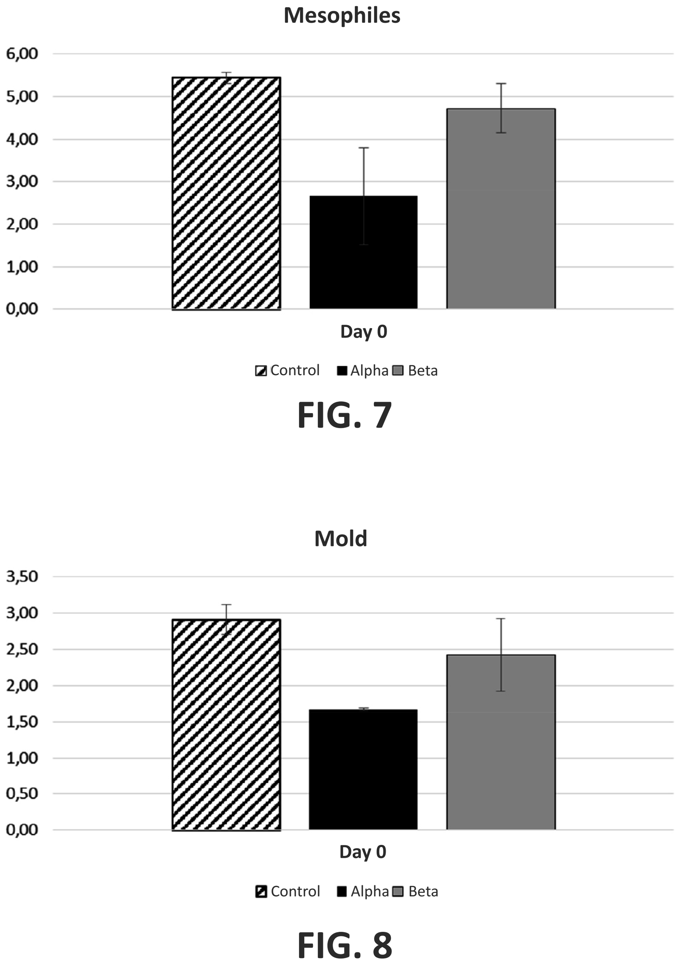

With this decontamination treatment of fresh snack cucumbers (bath in a solution with the composition object of this invention at 2% for 1 minute; or bath in a solution with a similar composition and also at 2% and for 1 minute, but using β-CDs instead of α-CDs), it was observed that the reduction of the surface microbial load is very intense (compared to the initial microbial load before treatment) when the composition object of this invention is used: almost 3 log CFU/cm² in TMA **(****FIG. 7****)**, and more than 1.0 log CFU/g in molds **(****FIG. 8****)**. However, when a similar composition is used, and also a 2% solution, but using β-CDs in. Instead of α-CDs, the reduction in the surface microbial load of snack cucumber is much less intense. Using β-CDs alone results in a reduction of the order of 1 log CFU/cm² in TMA **(****FIG. 7****)** and 0.5 log. CFU/g in molds (**FIG. 8**). This corresponds to what was indicated above. Essential oils adsorbed on α-CDs dissolve better in water than the same essential oils adsorbed on β-CDs, and therefore arrive better to the cell walls of the microorganisms subject to decontamination, which are on the surface of these fruits and in aqueous medium.

### Example 4: Manufacturing and application of the composition object of this invention, for surface microbial decontamination of fresh lemons. Comparison of the antimicrobial efficacy of the composition object of this invention with a similar composition, but using beta-cyclodextrins and doubling the concentration of the composition used.

The following stages were carried out:
1. Manufacturing and obtaining of the αCD-EOs inclusion complex in powder form, with the composition described above, and using a combination of eugenol and thymol EOs.
2. Encapsulation of EOs in β-CDs: An inclusion complex of EOs with β-CDs was prepared following any of the methods proposed by Marques (2010). The inclusion complex was obtained by combining EOs with β-CDs according to an equimolar relationship. The EOs used was a combination of eugenol and thymol in a 1:1 (weight/weight) ratio.
3. Mixture of the inclusion complex obtained in (1) (in a proportion of 43.60% by dry weight) with the rest of the ingredients in the following proportions: 48.55% (by dry weight) of empty α-CD, and 7.84% of the EOs combination indicated above, in a flour mixer, until good homogeneity is achieved.
4. Mixture of the inclusion complex obtained in (2) (in a proportion of 43.60% by dry weight) with the rest of the ingredients in the following proportions: 48.55% (by dry weight) of empty β-CD, and 7.84% of the EO combination indicated above, in a flour mixer, until good homogeneity is achieved.
5. Dissolution, separately, of the composition object of this invention in drinking water, in a proportion by weight of 2% (2 g/100 g of water or 20 g/kg of water), stirring until this is perfectly dissolved. And dissolution, on the other hand, of the composition obtained in (4) in drinking water, in a proportion by weight of 4% (4 g/100 g of water or 40 g/kg of water), stirring until it is perfectly dissolved. Thus, on the one hand, the solution with the composition object of this invention with α-CD (2%) is obtained; and, on the other, a solution of similar composition, but using β-CD (but at 4%).
6. Treatment of part of the fresh lemons in an industrial lemon post-harvest treatment line, where a shower (at a rate of 1.2 L/1000 kg of lemons) of the 4% solution of the composition with β-CD (prepared as indicated in (5)) is applied. And post-harvest treatment of another part of the fresh lemons in another separate line of the same industry, where a shower is applied (at a rate of 1.2 L/1000 kg of lemons) of the 2% solution of the composition object of this invention with α-CD, prepared as indicated in (5).
7. Drying of the lemons treated as indicated in (6) using hot air at a temperature of 30 °C.

Next, on the samples of fresh lemons, before treating and after treatment (as indicated in (6)) with one or another type of solution, the following analyzes were carried out:
- Analysis of the surface microbiology (total mesophilic aerobic microorganisms and molds) of lemons. The same methodology described in example 1 above was used. The results are expressed as log CFU/cm2 of fresh lemon.

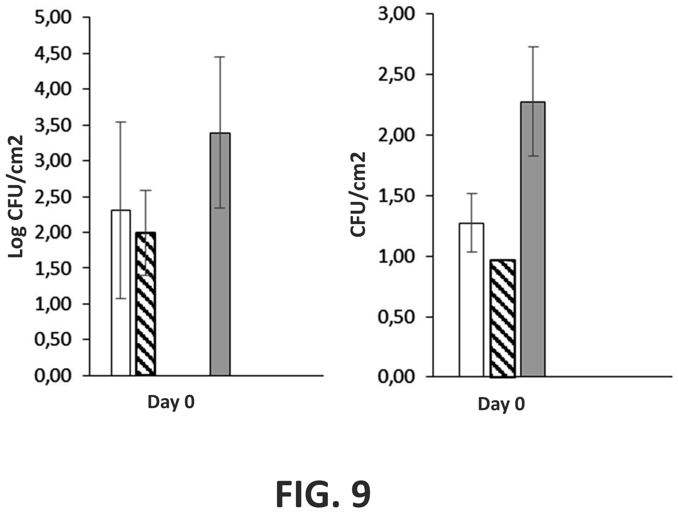

With this postharvest decontamination treatment of fresh lemons (shower with a solution with the composition object of this invention at 2%; or shower with a solution with a similar composition but at 4%, and using β-CD), it was observed that the reduction in the surface microbial load is more intense (compared to the initial microbial load before treatment) when the composition object of this invention is used: almost 1.5 log CFU/cm² in TMA **(****FIG. 9** **Left),** and almost 1.5 log CFU/g in molds **(****FIG. 9** **Right).** However, when a similar composition is used, and a solution even with a concentration of 4% (twice that used with the composition object of this invention, with α-CDs), but using β-CDs instead of α-CDs, the reduction of the surface microbial load of lemon is less intense. Using β-CD only a reduction of the order of 1 log CFU/cm² in TMA **(****FIG. 9** **Left)** and 1 log CFU/g in molds **(****FIG. 9** **Right)** is obtained. This again corresponds to what was observed previously. The essential oils adsorbed on α-CDs dissolve better in water than the same essential oils adsorbed on β-CDs, and therefore reach better the cell walls of the microorganisms being decontaminated, which are on the surface of these fruits and in aqueous medium.

## Claims

1. Powder composition for the surface microbial decontamination of fresh fruits and vegetables that comprises:
- EOs molecularly encapsulated in α-CDs, forming inclusion complexes, in a proportion by weight, with respect to the total dry weight of the composition, of 35 to 55%,
- empty α-CDs, in a proportion by weight, with respect to the total dry weight of the composition, of 35 to 55%,
- Free EOs adsorbed on the α-CDs in a proportion by weight, with respect to the total dry weight of the composition, of 5 to 10%, and
- Water, in a proportion by weight, with respect to the total dry weight of the composition, less than 4%

2. Composition, according to claim 1, which comprises:
- EOs molecularly encapsulated in α-CDs, forming inclusion complexes, in a proportion by weight, with respect to the total dry weight of the composition, of 40 to 50%,
- empty α-CDs, in a proportion by weight, with respect to the total dry weight of the composition, of 40 to 50%,
- Free EOs adsorbed on the α-CDs, in a proportion by weight, with respect to the total dry weight of the composition, of 6 to 8%, and
- Water, in a proportion by weight, with respect to the total dry weight of the composition, less than 4%.

3. Composition according to any of claims 1 and 2, where the α-CDs have the following characteristics:
- Number of glucose units: 6,
- Molecular weight: 972.
- Number of water molecules in the cavity: 6;
- Solubility in water at 25 °C: 145 g/L;
- Diameter of the central cavity (nm): 0.5-0.6;
- Outer diameter (nm): 1.4-1.5; and
- Height of toroidal shape (nm): 0.8.

4. Composition, according to any one of the previous claims, where the EOs encapsulated in α-CDs are selected from thymol, eugenol and their combination.

5. Procedure for the surface microbial decontamination of fresh fruits and vegetables that includes the stages of:
a. Dissolve the composition, according to claims 1-4, in drinking water or in an aqueous emulsion, stirring until the composition is perfectly dissolved,
b. Apply the aqueous solution obtained in a) on the fruits and/or vegetables, and
c. Dry the fruits and/or vegetables treated in b).

6. Procedure according to claim 5, where in step a) the composition is dissolved in drinking water, in a proportion by weight of no more than 2%.

7. Method according to claim 5, where in step a) the composition is dissolved in a water-based emulsion, in a proportion by weight of no more than 4%, with a final solids content in the emulsion after stirring of less than 12%.

8. Procedure according to any one of claims 5 to 7, where in step b), the fresh fruits and/or vegetables are bathed in the aqueous solution prepared in a), for a time of 0.5 to 1.5 minutes.

9. Procedure, according to claim 8, where the composition is bathed in the aqueous solution for a time of 0.8 to 1.2 minutes.

10. Procedure, according to any one of claims 5 to 7, where in step b), the aqueous solution is applied to the fresh fruits and/or vegetables using showers, at a rate of 1 to 1.2 liters of solution for each 1,000 kg of fruit and/or vegetables.

11. Procedure, according to one of claims 5 to 10, where in step c), the drying is carried out by vacuum cooling, drying and cooling at the same time.

12. Procedure according to any one of claims 5 to 10, where in step c) the drying is carried out with air at a temperature below 55 °C.

13. Procedure, according to claim 12, where the drying is carried out with air at a temperature between 25 and 35°C.

14. Use of a composition according to claims 1-4 for the surface microbial decontamination of fresh fruits and vegetables.
